# EUROPÄISCHE PATENTSCHRIFT

(11) **EP 4 087 801 B1**
(45) Veröffentlichungstag und Bekanntmachung des Hinweises auf die Patenterteilung: **19.03.2025**
(21) Anmeldenummer: 20829780.4
(22) Anmeldetag: 22.12.2020
(51) Int. Cl.: B65G 47/14

(54) **ENTNAHMEVORRICHTUNG ZUR ENTNAHME VON ROHRSTÜCKEN**
REMOVAL DEVICE FOR REMOVING PIPE PIECES
DISPOSITIF DE RETRAIT POUR RETIRER DES MORCEAUX DE TUYAU

(30) Priorität: 10.01.2020 DE 102020100459
(43) Veröffentlichungstag der Anmeldung: 16.11.2022
(73) Patentinhaber: TRUMPF Werkzeugmaschinen SE + Co. KG, 71254 Ditzingen (DE)
(72) Erfinder: LINDER, Bernd, 72501 Gammertingen (DE)
(74) Vertreter: Trumpf Patentabteilung
(86) Internationale Anmeldenummer: PCT/EP2020/087594
(87) Internationale Veröffentlichungsnummer: WO 2021/140026

(56) Entgegenhaltungen:
- DE-A1- 3 403 029
- DE-C- 661 715
- DE-T2- 69 734 891

## Beschreibung

Die Erfindung betrifft eine Entnahmevorrichtung zur Entnahme von Rohrstücken gemäß dem Oberbegriff von Anspruch 1. Ferner betrifft die Erfindung ein Beladesystem mit einer solchen Entnahmevorrichtung und ein Verfahren zum Entnehmen von Rohrstücken in der Entnahmevorrichtung oder dem Beladesystem.

Aus der DE 3403029 A1 ist eine Entnahmevorrichtung mit Merkmalen des Oberbegriffs des Anspruches 1 bekannt. Zum Ausheben und zur einzelnen Entnahme von Rohrstücken aus der Lagerkassette ist eine Zange vorgesehen, die das Rohrstück aufnimmt und festklemmt. Die restlichen Rohrstücke werden in die Lagerkassette zurückgeführt.

Nachteilig an dieser bekannten Entnahmevorrichtung ist, dass diese aufwändig aufgebaut und daher kostenintensiv ist. Ferner ist die Entnahme mittels der Entnahmevorrichtung sehr zeit- und energieintensiv, da die Lagerkassette nach jeder Entnahme eines einzelnen Rohrstückes zurück geschwenkt und der Ausheber zurück gefahren werden muss, um die Vielzahl der Rohrstücke aufzunehmen. Weiterhin ist die Handhabung mit der Zange umständlich und fehleranfällig. Ein Wechsel auf Rohrstücke anderer Geometrie oder Größe kann eine umständliche Neuprogrammierung und aufwändige Umrüstung der Entnahmevorrichtung erforderlich machen. Schließlich muss die Lagerkassette für die gesamte Dauer des Entnehmens der einzelnen Rohrstücke aus der Vielzahl von Rohrstücken vorgehalten werden und kann währenddessen nicht anderweitig verwendet werden oder bereits weitere Rohrstücke aufnehmen.

Aufgabe der Erfindung ist es, die Nachteile der aus dem Stand der Technik bekannten Entnahmevorrichtungen zu vermindern, insbesondere eine Entnahmevorrichtung bereitzustellen, die eine schnelle, zuverlässige und kostengünstige Entnahme von Rohrstücken ermöglicht.

Die Aufgabe wird gelöst durch eine Entnahmevorrichtung gemäß Anspruch 1. Vorgeschlagen wird dementsprechend eine Entnahmevorrichtung zur Entnahme von Rohrstücken, insbesondere einzelner Rohrstücke aus einer Vielzahl von Rohrstücken, wobei die Entnahmevorrichtung aufweist: eine Aufnahmeeinrichtung mit einer Ladekante, einem Aufnahmebereich zum Aufnehmen der Rohrstücke und einer die Ladekante mit dem Aufnahmebereich verbindenden Ladefläche, eine schwenkbare Lagerkassette zum Lagern einer Vielzahl von Rohrstücken, wobei die Lagerkassette vor der Ladekante der Aufnahmeeinrichtung angeordnet oder anordenbar ist und die vor der Ladekante angeordnete Lagerkassette dazu eingerichtet ist, um einen Schwenkwinkel der Lagerkassette gegenüber einer Parallelen der Horizontalen vor die Ladekante der Aufnahmeeinrichtung geschwenkt zu werden, einen Ausheber zum Ausheben der Vielzahl von Rohrstücken aus der Lagerkassette, wobei der Ausheber dazu eingerichtet ist, derart vor die Ladekante der Aufnahmeeinrichtung verfahren zu werden, dass der Ausheber die Vielzahl der Rohrstücke auf die Ladekante aushebt, so dass sich die Vielzahl der Rohrstücke entlang der Ladefläche in den Aufnahmebereich bewegen, wobei die Aufnahmeeinrichtung mit einem festgelegten Neigungswinkel in der Entnahmevorrichtung angeordnet ist und wobei die Aufnahmeeinrichtung eine Schiebereinheit aufweist, die die Bewegungsgeschwindigkeit der Rohrstücke entlang der Ladefläche begrenzt.

Die Schiebereinheit ermöglicht ein in der Bewegungsgeschwindigkeit begrenztes und damit sicheres und zuverlässiges Entladen der Rohrstücke in den Aufnahmebereich. Dazu kann die Schiebereinheit als linear auf der Ladefläche verfahrbare Schiebereinheit ausgebildet sein. Die Schiebereinheit kann insbesondere dazu eingerichtet sein, die Rohrstücke nach der Ladekante zu übernehmen und in Richtung zu dem Aufnahmebereich zu fördern. Dabei rutschen und/oder rollen die Rohrstücke in den Aufnahmebereich. Mit der Schiebereinheit können auch Rohrstücke von dem Aufnahmebereich zurück in die Lagerkassette gefördert werden.

Es kann vorgesehen sein, dass die Entnahmevorrichtung ferner einen Hebeschieber aufweist, der an dem Aufnahmebereich angeordnet oder anordenbar ist und dazu eingerichtet ist, einzelne Rohrstücke aus einer Vielzahl von Rohrstücken in dem Aufnahmebereich durch Heben zu entnehmen. Die Entnahmevorrichtung kann somit auch als eine Entnahmevorrichtung zur Entnahme einzelner Rohrstücke aus einer Vielzahl von Rohrstücken bezeichnet werden.

Dadurch, dass die Rohrstücke zunächst in den Aufnahmebereich bewegt werden, von wo aus sie einzeln mittels des Hebeschiebers entnommen werden, ist eine schnelle, kontinuierliche und prozesssichere Entnahme der einzelnen Rohrstücke möglich. Dabei muss die Lagerkassette nur einmal geschwenkt werden und der Ausheber muss nur einmal verschoben werden. Die Entnahmevorrichtung ermöglicht es somit, dass die einzelnen Rohrstücke schnell, zuverlässig und kostengünstig aus der Vielzahl von Rohrstücken entnommen werden.

Der Ausheber kann dabei insbesondere an einem Boden der Lagerkassette angeordnet sein oder werden oder der Ausheber kann den Boden der Lagerkassette umfassen, wobei die Vielzahl der Rohrstücke auf dem Boden aufliegen. Dann wird der Ausheber innerhalb der Lagerkassette verschoben, um die Vielzahl der Rohrstücke, insbesondere Rohrschicht für Rohrschicht, auszuheben.

Der Hebeschieber ist dabei derart eingerichtet, dass er jeweils nur ein einzelnes Rohrstück aus der Vielzahl von Rohrstücken anhebt. Um dies zu bezwecken, kann eine Hebefläche des Hebeschiebers, auf der das einzelne Rohrstück beim Anheben aufliegt, derart dimensioniert sein, dass nur ein einzelnes Rohrstück auf der Hebefläche angeordnet werden kann.

Die Vielzahl der Rohrstücke sortiert sich als ein Bündel von Rohrstücken in den Aufnahmebereich ein. Insoweit ist der Aufnahmebereich dazu in der Lage, mehrere Rohrstücke, also ein Bündel an Rohrstücken, aufzunehmen. Der Aufnahmebereich kann beispielsweise einen V-förmigen oder U-förmigen Querschnitt aufweisen.

Die Entnahmevorrichtung kann insbesondere eine Steuereinrichtung aufweisen, die dazu eingerichtet ist, die Entnahmevorrichtung zu steuern. So kann die Steuervorrichtung dazu eingerichtet sein, die Aufnahmeeinrichtung, die Lagerkassette, den Ausheber und/oder den Hebeschieber zu steuern, um jeweils die vorstehend und auch nachfolgend erläuterten Verfahrensschritte auszuführen.

Auch kann vorgesehen sein, dass der Ausheber, die Schiebereinheit und/oder der Hebeschieber linear verfahrbar ausgebildet sind. So können der Ausheber, die Schiebereinheit und/oder der Hebeschieber Linearantriebe aufweisen. Dies ermöglicht eine kostengünstige Ausbildung von Ausheber, Schiebereinheit und/oder Hebeschieber sowie eine einfache Handhabung der Rohrstücke.

Ferner kann vorgesehen sein, dass der Ausheber und die Lagerkassette dazu eingerichtet sind, gemeinsam um den Schwenkwinkel geschwenkt zu werden. Entsprechend kann vorgesehen sein, dass der Ausheber ortsfest in Bezug auf die Lagerkassette ausgebildet ist, sodass der Ausheber stets mit dem Schwenkwinkel mitgeschwenkt wird. Dadurch ist ferner nicht notwendig, den Ausheber selbst schräg gegenüber der Lagerkassette anzustellen. So kann der Ausheber bzw. ein von dem Ausheber bewegter Boden der Lagerkassette mit seiner Auflagefläche insbesondere in einem rechten Winkel gegenüber Wandungen der Lagerkassette verlaufen. Dies verhindert gegenüber einem Schrägstellen des Aushebers gegenüber der Lagerkassette ein Verkratzen der Rohrstücke beim Ausheben.

Außerdem kann vorgesehen sein, dass der Schwenkwinkel im Bereich von 15° bis 45° liegt. Insbesondere kann der Schwenkwinkel im Bereich von 20° bis 40° liegen. Ein Schwenkwinkel in diesen Bereichen hat sich als vorteilhaft für ein prozesssicheres Bewegen der Vielzahl von Rohrstücken aus der Lagerkassette in den Aufnahmebereich erwiesen.

Weiterhin kann vorgesehen sein, dass die Entnahmevorrichtung ein Regal und ein Regalbediengerät zum Entnehmen der Lagerkassette aus dem Regal und/oder zum Umlagern von Rohrstücken aus dem Regal in die Lagerkassette aufweist. Das Regal kann mit mehreren Lagerkassetten oder Regalfächern zum Lagern von Rohrstücken ausgebildet sein. So können hinsichtlich etwa Größe, insbesondere Länge, Material und Form unterschiedliche Rohrstücke in unterschiedlichen Lagerkassetten oder Regalfächern gelagert werden und je nach Bedarf von dem Regalbediengerät entnommen werden. Das Lager kann dabei als ein Lagerturm mit mehreren übereinander gestapelten Lagerkassetten oder Regalfächern ausgebildet sein. Das Lager kann insbesondere modular aufgebaut sein. So kann das Lager insbesondere in der Höhe um weitere Lagerkassetten und Regalfächer erweiterbar ausgebildet sein. Es ist möglich, mehrere, beispielsweise zwei, Lager nebeneinander anzuordnen. Ferner kann die Entnahmevorrichtung mehrere Aufnahmeeinrichtungen und Hebeschieber, beispielsweise jeweils zwei, aufweisen. So können unterschiedliche Aufnahmeeinrichtungen mit Lagerkassetten mit darin lagernden Rohrstücken versorgt und der Bearbeitung in einer Rohrbearbeitungsmaschine zugeführt werden.

Die Lagerkassette kann insbesondere verfahrbar ausgebildet sein. Beispielsweise kann die Lagerkassette rollbar auf Schienen angeordnet sein. Das Anordnen der Lagerkassette vor der Ladekante der Aufnahmeeinrichtung kann dann durch entsprechendes Verfahren der Lagerkassette ermöglicht werden.

Schließlich kann auch vorgesehen sein, dass der Aufnahmebereich gegenüber der Lagerkassette derart dimensioniert ist, dass alle in der Lagerkassette aufnehmbaren Rohrstücke der Vielzahl von Rohrstücken in dem Aufnahmebereich aufgenommen werden können. Dies ermöglicht es, dass die Lagerkassette vollständig geleert wird bzw. der Aufnahmebereich alle in der Lagerkassette lagernden Rohrstücke aufnimmt. So wird der Aufnahmebereich zur anschließenden einzelnen Entnahme der Rohrstücke ausreichend versorgt und die Lagerkassette wird frei. So kann die Lagerkassette beispielsweise bereits mit neuen Rohrstücken für die weitere Entnahme und anschließende Bearbeitung beladen werden.

Auch wird die eingangs erwähnte Aufgabe gelöst durch ein Beladesystem zum Beladen einer Rohrbearbeitungsmaschine mit einzelnen Rohrstücken, wobei das Beladesystem die Entnahmevorrichtung und eine Beladevorrichtung aufweist, wobei die Beladevorrichtung einen schwenkbaren Greifer aufweist, der dazu eingerichtet ist, einzelne Rohrstücke aus dem Aufnahmebereich zu greifen und zu der Rohrbearbeitungsmaschine zu bewegen. Insbesondere kann der schwenkbare Greifer dazu eingerichtet sein, das mittels des Hebeschiebers entnommene einzelne Rohrstück zu greifen und zu der Rohrbearbeitungsmaschine zu bewegen.

So können die Rohrstücke einfach und schnell der Rohrbearbeitungsmaschine zugeführt werden. Die Rohrbearbeitungsmaschine kann dabei insbesondere einen Laser zum Laserschneiden der Rohrstücke aufweisen.

Dabei kann vorgesehen sein, dass das Beladesystem eine Längenmessvorrichtung zum Messen einer Länge der einzelnen Rohrstücke aufweist. Dies ermöglicht es, die einzelnen Rohrstücke in einem korrekten Abstand zu einer Bearbeitungsstelle der Rohrbearbeitungsmaschine in der Rohrbearbeitungsmaschine zu fixieren.

Auch wird die eingangs erwähnte Aufgabe gelöst durch ein Verfahren zum Entnehmen von Rohrstücken in der Entnahmevorrichtung oder in dem Beladesystem, wobei das Verfahren die Schritte aufweist: Lagern von Rohrstücken in der Lagerkassette, Anordnen und Schwenken der Lagerkassette vor die Ladekante der Aufnahmeeinrichtung, Ausheben der Vielzahl von Rohrstücken aus der Lagerkassette auf die Ladekante der Aufnahmeeinrichtung, und Bewegen der Vielzahl von Rohrstücken von der Ladekante in den Aufnahmebereich.

Dabei kann insbesondere vorgesehen sein, dass alle Rohrstücke der Vielzahl von Rohrstücken aus der Lagerkassette in den Aufnahmebereich bewegt werden. Ferner kann vorgesehen sein, dass die Rohrstücke sich, insbesondere überwiegend oder einzig, durch die Einwirkung der Gravitationskraft in den Aufnahmebereich bewegen.

Vorgesehen sein kann auch ein Verfahren zum Entnehmen einzelner Rohrstücke aus einer Vielzahl von Rohrstücken mit den Schritten des Verfahrens zum Entnehmen von Rohrstücken in der Entnahmevorrichtung oder in dem Beladesystem und ferner mit dem Schritt: Entnehmen eines einzelnen Rohrstückes in dem Aufnahmebereich durch Heben mittels des Hebeschiebers.

Weitere Einzelheiten und vorteilhafte Ausgestaltungen der Erfindung sind der nachfolgenden Beschreibung zu entnehmen, anhand derer Ausführungsbeispiele der Erfindung näher beschrieben und erläutert werden.

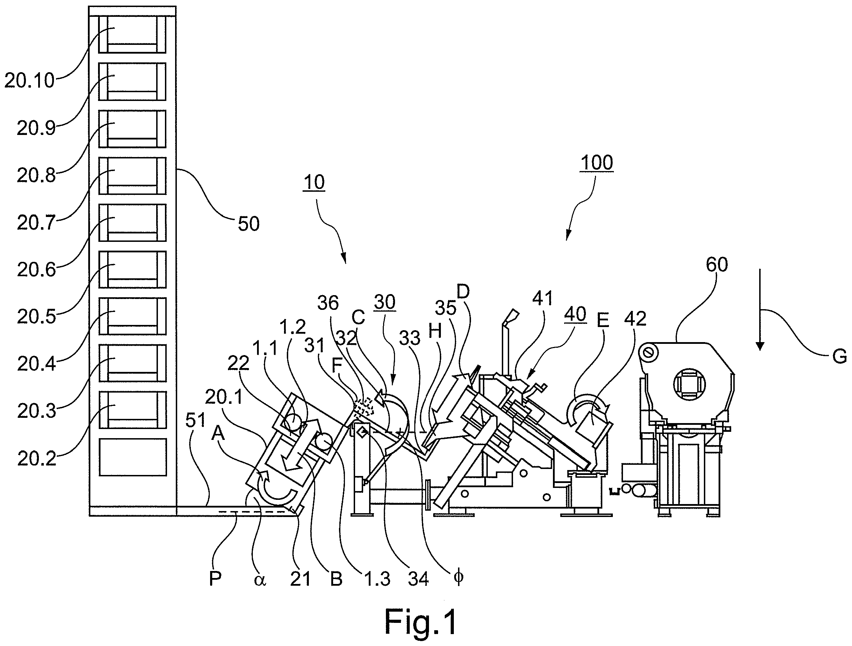

Die einzige Figur zeigt eine schematische Seitenansicht eines Ausführungsbeispiels eines Beladesystems für eine Rohrbearbeitungsmaschine mit einer Entnahmevorrichtung.

Die in der Figur gezeigte Entnahmevorrichtung 10 umfasst mehrere Lagerkassetten 20.1, 20.2, 20.3, 20.4, 20.5, 20.6, 20.7, 20.8, 20.9, 20.10, ein Lager 50 und eine Aufnahmeeinrichtung 30. Das in der Figur gezeigt Beladesystem 100 umfasst die Entnahmevorrichtung 10 sowie eine Beladevorrichtung 40.

In dem Lager 50 sind vorliegend die Lagerkassetten 20.2, 20.3, 20.4, 20.5, 20.6, 20.7, 20.8, 20.9, 20.10 gelagert während die Lagerkassette 20.1 an der Aufnahmeeinrichtung 30 angeordnet ist. Die Lagerkassette 20.1 wurde hierzu auf einer Schiene 51 vor die Aufnahmeeinrichtung 30 verfahren. In der Lagerkassette 20.1 befindet sich eine Vielzahl von Rohrstücken 1.1, 1.2, 1.3. Diese sollen einzeln aus der Lagerkassette 20.1 entnommen werden, um eine Rohrbearbeitungsmaschine 60 damit zu beladen.

Hierzu wird die Lagerkassette 20.1 um einen ersten Schwenkpunkt 21 in Richtung des Pfeiles A um einen Schwenkwinkel γ gegenüber der Schiene 51 bzw. dem Boden bzw. einer Linie P verschoben. Der Schwenkwinkel γ beträgt vorliegend 30°. Ein Ausheber 22 ist linear innerhalb der Lagerkassette 20.1 verfahrbar und hebt durch Verfahren in Richtung zu der Aufnahmeeinrichtung 30 bzw. des Pfeiles B sämtliche in der Lagerkassette 20.1 gelagerte Rohrstücke 1.1, **1.2,** 1.3 hoch.

Sobald der Ausheber 22 eine Ladekante 31 der Aufnahmeeinrichtung 30 erreicht, bewegen sich die in einer obersten Reihe der Lagerkassette 20.1 angeordneten Rohrstücke 1.1, **1.2,** 1.3 aus der Lagerkassette 20.1 entlang einer Ladefläche 32 der Aufnahmeeinrichtung 30 in einen Aufnahmebereich 33 der Aufnahmeeinrichtung 30. Hierzu ist die Ladefläche 32 in Richtung von der Ladekante 31 zu dem Aufnahmebereich 33 gegenüber einer Horizontalen H in Gravitationsrichtung G um einen Neigungswinkel φ geneigt. Die Horizontale H ist parallel zum Boden. Die Horizontale ist auch senkrecht zu der Gravitationsrichtung G bzw. den (in die Gravitationsrichtung G verlaufenden) Gravitationsfeldlinien. Die Linie P ist eine Parallele P der Horizontalen H**.** Durch eine weitere Bewegung des Aushebers 22 können weitere, in einer nächsten Reihe in der Lagerkassette 20.1 angeordnete, Rohrstücke 1 über die Ladekante 31 auf die Ladefläche 32 bewegt werden.

Ansonsten kann die ausgelagerte Lagerkassette 20.1, z.B. wenn sie vollständig entladen wurde, zu dem Lager 50 verfahren werden und eine andere Rohrstücke 1 lagernde der Lagerkassetten 20.2, 20.3, 20.4, 20.5, 20.6, 20.7, 20.8, 20.9, 20.10 kann mittels eines nicht gezeigten Regalbediengeräts entnommen und an der Aufnahmeeinrichtung 30 angeordnet werden.

Die Aufnahmeeinrichtung 30 weist ferner eine Schiebereinheit 36 auf, die linear entlang der Ladefläche 32 verfahrbar ausgebildet ist. Um die Rohrstücke 1 von der Ladekante 31 besonders kontrolliert in den Aufnahmebereich 33 zu befördern, kann die Schiebereinheit 36 allmählich in Richtung von der Ladekante 31 zu dem Aufnahmebereich 33 verschoben werden. Die Rohrstücke 1 liegen dabei an der Schiebereinheit 36 an und werden zusammen mit der Schiebereinheit 36 mittels der Schwerkraft und Neigung der Ladefläche 32 in den Aufnahmebereich 33 befördert. Ebenso kann die Schiebereinheit 36 in Richtung von dem Aufnahmebereich 33 zu der Ladekante 31 verfahren werden, um Rohrstücke 1 aus dem Aufnahmebereich 33 in die Lagerkassette 20 zurück zu bewegen. Die lineare Verfahrbarkeit der Schiebereinheit 36 in die beiden erwähnten Richtungen ist mittels des Pfeiles F gekennzeichnet.

Die Schiebereinheit 36 wird zur Kontrolle der Bewegungsgeschwindigkeit der Rohrstücke 1 genutzt Mittels eines linear verfahrbaren Hebeschiebers 35, der an dem Aufnahmebereich 33 angeordnet ist, wird schließlich ein einzelnes Rohrstück 1 aus der Vielzahl von Rohrstücken 1.1, **1.2,** 1.3 in dem Aufnahmebereich 33 durch Heben in Richtung des Pfeiles D entnommen.

Das derart vereinzelte Rohrstück 1 wird der Beladevorrichtung 40 zugeführt. Ein Greifer 41 greift das vereinzelte Rohrstück 1 und bewegt es durch Schwenken um einen dritten Schwenkpunkt 42 in Richtung des Pfeiles E zu der Rohrbearbeitungsmaschine 60. In der Rohrbearbeitungsmaschine 60 wird das vereinzelte Rohrstück 1 schließlich bearbeitet.

## Patentansprüche

1. Entnahmevorrichtung (10) zur Entnahme von Rohrstücken (1), wobei die Entnahmevorrichtung (10) aufweist:
(a) eine Aufnahmeeinrichtung (30) mit einer Ladekante (31), einem Aufnahmebereich (33) zum Aufnehmen der Rohrstücke (1) und einer die Ladekante (31) mit dem Aufnahmebereich (33) verbindenden Ladefläche (32),
(b) eine schwenkbare Lagerkassette (20) zum Lagern einer Vielzahl von Rohrstücken (1), wobei die Lagerkassette (20) vor der Ladekante (31) der Aufnahmeeinrichtung (30) angeordnet oder anordenbar ist und die vor der Ladekante (31) angeordnete Lagerkassette (20) dazu eingerichtet ist, um einen Schwenkwinkel (γ) der Lagerkassette (20) gegenüber einer Parallelen (P) der Horizontalen (H) vor die Ladekante (31) der Aufnahmeeinrichtung (30) geschwenkt zu werden,
(c) einen Ausheber (22) zum Ausheben der Vielzahl von Rohrstücken (1) aus der Lagerkassette (20), wobei der Ausheber (22) dazu eingerichtet ist, derart vor die Ladekante (31) der Aufnahmeeinrichtung (30) verfahren zu werden, dass der Ausheber (22) die Vielzahl der Rohrstücke (1) auf die Ladekante (31) aushebt, so dass sich die Vielzahl der Rohrstücke (1) entlang der Ladefläche (32) in den Aufnahmebereich (33) bewegen,
**dadurch gekennzeichnet, dass**
die Aufnahmeeinrichtung (30) mit einem festgelegten Neigungswinkel (φ) in der Entnahmevorrichtung (10) angeordnet ist und, dass die Aufnahmeeinrichtung (30) eine Schiebereinheit (36) aufweist, die die Bewegungsgeschwindigkeit der Rohrstücke (1) entlang der Ladefläche (32) begrenzt.

2. Entnahmevorrichtung (10) nach Anspruch 1, **dadurch gekennzeichnet, dass** die Entnahmevorrichtung (10) ferner einen Hebeschieber (35) aufweist, der an dem Aufnahmebereich (33) angeordnet oder anordenbar ist und dazu eingerichtet ist, einzelne Rohrstücke (1) aus der Vielzahl von Rohrstücken (1) in dem Aufnahmebereich (33) durch Heben zu entnehmen.

3. Entnahmevorrichtung (10) nach einem der voranstehenden Ansprüche, wobei der Ausheber (22) und/oder der Hebeschieber (35) und/oder die Schiebereinheit (36) linear verfahrbar ausgebildet sind.

4. Entnahmevorrichtung (10) nach einem der voranstehenden Ansprüche, wobei der Ausheber (22) und die Lagerkassette (20) dazu eingerichtet sind, gemeinsam um den Schwenkwinkel (γ) geschwenkt zu werden.

5. Entnahmevorrichtung (10) nach einem der voranstehenden Ansprüche, wobei der Schwenkwinkel (γ) im Bereich von 15° bis 45° liegt.

6. Entnahmevorrichtung (10) nach einem der voranstehenden Ansprüche, wobei die Entnahmevorrichtung (10) ein Regal (50) und ein Regalbediengerät zum Entnehmen der Lagerkassette (20) aus dem Regal (50) und/oder zum Umlagern von Rohrstücken (1) aus dem Regal (50) in die Lagerkassette (20) aufweist.

7. Entnahmevorrichtung (10) nach einem der voranstehenden Ansprüche, wobei der Aufnahmebereich (33) gegenüber der Lagerkassette (20) derart dimensioniert ist, dass alle in der Lagerkassette (20) aufnehmbaren Rohrstücke (1) der Vielzahl von Rohrstücken (1) in dem Aufnahmebereich (33) aufgenommen werden können.

8. Beladesystem (100) zum Beladen einer Rohrbearbeitungsmaschine (60) mit einzelnen Rohrstücken (1), wobei das Beladesystem (100) eine Entnahmevorrichtung (10) nach einem der voranstehenden Ansprüche und eine Beladevorrichtung (40) aufweist, wobei die Beladevorrichtung (40) einen schwenkbaren Greifer (41) aufweist, der dazu eingerichtet ist, einzelne Rohrstücke (1) zu greifen und zu der Rohrbearbeitungsmaschine (60) zu bewegen.

9. Beladesystem (100) nach Anspruch 8, wobei das Beladesystem (100) eine Längenmessvorrichtung zum Messen einer Länge der einzelnen Rohrstücke (1) aufweist.

10. Verfahren zum Entnehmen von Rohrstücken (1) in einer Entnahmevorrichtung (10) nach einem der Ansprüche 1 bis 7 oder in einem Beladesystem (100) nach einem der Ansprüche 8 bis 9, wobei das Verfahren die Schritte aufweist:
(a) Lagern einer Vielzahl von Rohrstücken (1) in der Lagerkassette (20),
(b) Anordnen und Schwenken der Lagerkassette (20) vor die Ladekante (31) der Aufnahmeeinrichtung (30),
(c) Ausheben der Vielzahl von Rohrstücken (1) aus der Lagerkassette (20) auf die Ladekante (31) der Aufnahmeeinrichtung (30), und
(d) Bewegen der Vielzahl von Rohrstücken (1) von der Ladekante (20) in den Aufnahmebereich (33).

11. Verfahren zum Entnehmen einzelner Rohrstücke aus einer Vielzahl von Rohrstücken (1) mit den Schritten des Verfahrens gemäß Anspruch 10 in einer Entnahmevorrichtung (10) nach einem der Ansprüche 2 bis 7 oder in einem Beladesystem (100) nach einem der Ansprüche 8 bis 9 und ferner mit dem Schritt: Entnehmen eines einzelnen Rohrstückes (1) in dem Aufnahmebereich (33) durch Heben mittels des Hebeschiebers (35).

## Claims

1. A removal device (10) for removing pipe sections (1), wherein the removal device (10) has:
(a) a holding device (30) with a loading edge (31), a holding area (33) for holding the pipe sections (1) and a loading area (32) connecting the loading edge (31) to the holding area (33),
(b) a pivotable storage cassette (20) for storing a plurality of pipe sections (1), wherein the storage cassette (20) is arranged or can be arranged in front of the loading edge (31) of the holding device (30) and the storage cassette (20) arranged in front of the loading edge (31) is configured to be pivoted in front of the loading edge (31) of the holding device (30) by a pivoting angle (γ) of the storage cassette (20) relative to a parallel (P) of the horizontal (H),
(c) a lifter (22) for lifting the plurality of pipe sections (1) out of the storage cassette (20), wherein the lifter (22) is configured to be moved in front of the loading edge (31) of the holding device (30) in such a way that the lifter (22) lifts the plurality of pipe sections (1) onto the loading edge (31) so that the plurality of pipe sections (1) move along the loading area (32) into the holding area (33),
**characterized in that,**
the holding device (30) is arranged at a fixed angle of inclination (φ) in the removal device (10), and **in that** the holding device (30) has a slide unit (36) which delimits the speed of movement of the pipe sections (1) along the loading area (32).

2. The removal device (10) according to claim 1, **characterized in that** the removal device (10) also has a lifting slide (35) which is arranged or can be arranged on the holding area (33) and is configured to remove individual pipe sections (1) from the plurality of pipe sections (1) in the holding area (33) by lifting.

3. The removal device (10) according to one of the preceding claims, wherein the lifter (22) and/or the lifting slide (35) and/or the slide unit (36) are designed such that they can be moved in a linear manner.

4. The removal device (10) according to one of the preceding claims, wherein the lifter (22) and the storage cassette (20) are configured to be pivoted together about the pivoting angle (γ).

5. The removal device (10) according to one of the preceding claims, wherein the pivoting angle (γ) is in the range from 15° to 45°.

6. The removal device (10) according to one of the preceding claims, wherein the removal device (10) has a shelf (50) and a storage and retrieval unit for removing the storage cassette (20) from the shelf (50) and/or for transferring pipe sections (1) from the shelf (50) into the storage cassette (20).

7. The removal device (10) according to one of the preceding claims, wherein the holding area (33) is dimensioned relative to the storage cassette (20) such that all pipe sections (1) of the plurality of pipe sections (1) that can be received in the storage cassette (20) can be received in the holding area (33).

8. A loading system (100) for loading a pipe machining apparatus (60) with individual pipe sections (1), wherein the loading system (100) has a removal device (10) according to one of the preceding claims and a loading device (40), wherein the loading device (40) has a pivotable gripper (41) which is configured to grip individual pipe sections (1) and to move them to the pipe machining apparatus (60).

9. The loading system (100) according to claim 8, wherein the loading system (100) has a length measuring device for measuring a length of the individual pipe sections (1).

10. A method for removing pipe sections (1) in a removal device (10) according to any one of claims 1 to 7 or in a loading system (100) according to any one of claims 8 to 9, wherein the method comprises the steps of:
(a) storing a plurality of pipe sections (1) in the storage cassette (20),
(b) arranging and pivoting the storage cassette (20) in front of the loading edge (31) of the holding device (30),
(c) lifting the plurality of pipe sections (1) out of the storage cassette (20) onto the loading edge (31) of the holding device (30), and
(d) moving the plurality of pipe sections (1) from the loading edge (20) into the holding area (33).

11. The method for removing individual pipe sections from a plurality of pipe sections (1), with the steps of the method in accordance with claim 10 in a removal device (10) according to one of claims 2 to 7 or in a loading system (100) according to one of claims 8 to 9 and further with the step of: removing an individual pipe section (1) in the holding area (33) by lifting by means of the lifting slide (35).

## Revendications

1. Dispositif de prélèvement (10) pour le prélèvement de pièces tubulaires (1), dans lequel le dispositif de prélèvement (10) comprend :
(a) un dispositif de réception (30) avec un bord de chargement (31), une zone de réception (33) pour la réception des pièces tubulaires (1) et une surface de chargement (32) reliant le bord de chargement (31) à la zone de réception (33),
(b) une cassette de support (20) pivotante pour le stockage d'une pluralité de pièces tubulaires (1), dans laquelle la cassette de support (20) est disposée ou disposable devant le bord de chargement (31) du dispositif de réception (30) et la cassette de support (20) disposée devant le bord de chargement (31) est conçue pour être pivotée selon un angle de pivotement (γ) de la cassette de support (20) par rapport à une parallèle (P) de l'horizontale (H) devant le bord de chargement (31) du dispositif de réception (30),
(c) un élévateur (22) pour le soulèvement de la pluralité de pièces tubulaires (1) depuis la cassette de support (20), dans lequel l'élévateur (22) est conçu pour être manœuvré devant le bord de chargement (31) du dispositif de réception (30), de manière à ce que l'élévateur (22) soulève la pluralité de pièces tubulaires (1) sur le bord de chargement (31), de sorte que la pluralité de pièces tubulaires (1) se déplace le long de la surface de chargement (32) dans la zone de réception (33),
**caractérisé en ce que,**
le dispositif de réception (30) est disposé avec un angle d'inclinaison (φ) prédéfini dans le dispositif de prélèvement (10) et **en ce que** le dispositif de réception (30) comprend une unité de coulissement (36) qui limite la vitesse de déplacement des pièces tubulaires (1) le long de la surface de chargement (32).

2. Dispositif de prélèvement (10) selon la revendication 1, **caractérisé en ce que** le dispositif de prélèvement (10) comprend en outre un coulisseau de levage (35) disposé ou disposable dans la zone de réception (33) et conçu pour prélever des pièces tubulaires (1) individuelles à partir de la pluralité de pièces tubulaires (1) dans la zone de réception (33) par levage.

3. Dispositif de prélèvement (10) selon l'une des revendications précédentes, dans lequel l'élévateur (22) et/ou le coulisseau de levage (35) et/ou l'unité de coulissement (36) sont formés pour pouvoir être manœuvrés de manière linéaire.

4. Dispositif de prélèvement (10) selon l'une des revendications précédentes, dans lequel l'élévateur (22) et la cassette de support (20) sont conçus pour être pivotés ensemble selon un angle de pivotement (γ).

5. Dispositif de prélèvement (10) selon l'une des revendications précédentes, dans lequel l'angle de pivotement (γ) est compris entre 15° et 45°.

6. Dispositif de prélèvement (10) selon l'une des revendications précédentes, dans lequel le dispositif de prélèvement (10) comprend un rayonnage (50) et un transtockeur pour le prélèvement de la cassette de support (20) depuis le rayonnage (50) et/ou pour le transfert des pièces tubulaires (1) depuis le rayonnage (50) dans la cassette de support (20).

7. Dispositif de prélèvement (10) selon l'une des revendications précédentes, dans lequel la zone de réception (33) est dimensionnée par rapport à la cassette de support (20) de manière à ce que toutes les pièces tubulaires (1) de la pluralité de pièces tubulaires (1) pouvant être réceptionnées dans la cassette de support (20) puissent être réceptionnées dans la zone de réception (33).

8. Système de chargement (100) pour le chargement d'une machine de traitement de tubes (60) avec des pièces tubulaires (1) individuelles, dans lequel le système de chargement (100) comprend un dispositif de prélèvement (10) selon l'une des revendications précédentes et un dispositif de chargement (40), dans lequel le dispositif de chargement (40) comprend un préhenseur pivotant (41) conçu pour saisir des pièces tubulaires (1) individuelles et les déplacer vers la machine de traitement de tubes (60).

9. Système de chargement (100) selon la revendication 8, dans lequel le système de chargement (100) comprend un dispositif de mesure de longueur pour mesurer une longueur des pièces tubulaires (1) individuelles.

10. Procédé de prélèvement de pièces tubulaires (1) dans un dispositif de prélèvement (10) selon l'une des revendications 1 à 7 ou dans un système de chargement (100) selon l'une des revendications 8 à 9, dans lequel le procédé comprend les étapes :
(a) le stockage d'une pluralité de pièces tubulaires (1) dans la cassette de support (20),
(b) la disposition et le pivotement de la cassette de support (20) devant le bord de chargement (31) du dispositif de réception (30),
(c) le soulèvement de la pluralité de pièces tubulaires (1) à partir de la cassette de support (20) sur le bord de chargement (31) du dispositif de réception (30), et
(d) le déplacement de la pluralité de pièces tubulaires (1) du bord de chargement (20) dans la zone de réception (33).

11. Procédé de prélèvement de pièces tubulaires individuelles à partir d'une pluralité de pièces tubulaires (1) d'après les étapes du procédé selon la revendication 10 dans un dispositif de prélèvement (10) selon l'une des revendications 2 à 7 ou dans un système de chargement (100) selon l'une des revendications 8 à 9, avec en outre l'étape : le prélèvement d'une pièce tubulaire (1) individuelle dans la zone de réception (33) par levage à l'aide du coulisseau de levage (35).
